# EUROPÄISCHE PATENTSCHRIFT

(11) **EP 2 650 057 B1**
(45) Veröffentlichungstag und Bekanntmachung des Hinweises auf die Patenterteilung: **12.01.2022**
(21) Anmeldenummer: 13001754.4
(22) Anmeldetag: 05.04.2013
(51) Int. Cl.: B09B 3/00, C22B 1/243

(54) **Verfahren zur Inertisierung von Schwermetallen, Chloriden und anderen Salzbildnern sowie löslichen Feststoffen und metallischen Kontaminationen**
Method for the inertisation of heavy metals, chlorides and other salt-forming compounds and soluble solids and metallic contaminations
Procédé d'inertisation de métaux lourds, de chlorures et d'autres halogènes ainsi que de solides solubles et de contaminations métalliques

(30) Priorität: 13.04.2012 AT 4442012
(43) Veröffentlichungstag der Anmeldung: 16.10.2013
(73) Patentinhaber: Andritz AG, 8045 Graz (AT)
(72) Erfinder: Fraissler, Gerald, A-8043 Graz (AT); Kaufmann, Kurt, A-8793 Gai (AT); Kaiser, Sebastian, A-1190 Wien (AT); Jaritz, Günter, A-8010 Graz (AT)

(56) Entgegenhaltungen:
- EP-A1- 1 918 031
- EP-A2- 0 313 016
- EP-A2- 1 167 556
- DE-A1- 3 924 565
- DE-A1- 10 229 697
- US-A- 5 573 576
- US-A1- 2012 024 235
- Frantisek Skvára: "Geopolymer materials based on fly ash", Ceramics-Silikaty, 1. Januar 2005 (2005-01-01), Seiten 195-204, XP055073877, Gefunden im Internet: URL:http://www.geopolymery.eu/aitom/upload /documents/publikace/2005/ceramics2005_03_ 195.pdf [gefunden am 2013-08-01]

## Beschreibung

Die Erfindung betrifft ein Verfahren, in dem durch alumosilikatische Fixierung oder Stabilisierung in mineralischen Polymeren Schwermetalle, Chloride und andere Salzbildner sowie lösliche Feststoffe und metallische Kontaminationen in Aschen und/oder Abfällen aus Verbrennungsprozessen oder anderen thermischen, chemischen, mechanischen Prozessen durch alumosilikatische Fixierung oder Stabilisierung in mineralischen Polymeren mit einer sich ausgebildeten dichten und festen Bindemittelmatrix inertisiert werden.

Schlacken, Flugaschen, Stäube und Reaktionsprodukte aus der Verbrennung insbesondere von Ersatzbrennstoff (EBS) verfeuernden Wirbelschichtkesseln weisen hohe Schadstoffgehalte auf. Es können natürlich auch andere Abfallstoffe aus thermischen, chemischen oder mechanischen Prozessen wie z.B. Schlämme, Schlacken, Krätzen, Stäube aus der Metallindustrie sowie der Gesteinshüttenindustrie oder anderen Industriezweigen behandelt werden. Abhängig von den gesetzlichen Auflagen ist ihre derzeitige Entsorgung hinsichtlich Ober- und/oder Untertagedeponierung oder andere Verwertung für Anlagenbetreiber oft sehr kostenintensiv.

Ein Hauptproblem bei der Deponierung stellen Schwermetalle, Chloride und andere Salzbildner sowie lösliche Feststoffe und metallische Kontaminationen dar. Diese können in den Deponieuntergrund gelangen und durch Vorhandensein von geeigneten Reaktionspartnern und - Bedingungen weitere giftige Verbindungen und Kontaminationen begünstigen.

Ein Verfahren zum Inertisieren von Asche ist z.B. aus der DE 697 01 128 T2 (EP 0 883 585 B1) bekannt. Bei diesem Verfahren werden der Asche Phosphorsäure bzw. Phosphate zugegeben, die entstehende Masse dann geglüht. Der geglühten Masse wird dann hydraulisches Bindemittel zugegeben und der dann entstehende hydraulische Mörtel in einem Drehrohrtrockner behandelt und anschließend mehrere Tage zur Reifung und Abbindung gelagert. Ein derartiges Verfahren ist apparativ und zeitlich sehr aufwändig und kann nur beschränkt Schwermetalle binden.

Ähnlich diesem Verfahren wird in der US 6132355 A1 zur Inertisierung von Aschen, die Schwermetalle und metallisches Aluminium enthalten, Phosphorsäure oder Alkaliphosphate zur Stabilisierung von metallischem Aluminium zugesetzt. Bei diesem Schritt bleibt das Innere der Partikel aber weiterhin metallisch, während außen um diesen metallischen Kern eine Passivschicht aus Aluminium(hexameta)phosphat ausgebildet wird. Durch Fehler in der Gitterstruktur dieser Passivschicht und/oder durch ihre zu dünne Ausbildung kann diese Schicht unter nasschemischen Bedingungen durchbrochen und das metallische Aluminium unter Freisetzung von explosionsgefährlichem Wasserstoff hydratisiert/oxidiert werden. Falls erforderlich, ist ein Kalzinierschritt bei Temperaturen von 700 bis 800°C zur Verbrennung von organischen Verunreinigungen und Reststoffen vorgesehen. Die nochmalige Anmischung mit Wasser und hydraulischen Bindemitteln, aus der Gruppe der Portlandzemente, sowie Pelletierung in einer Drehtrommel sollen der Stabilisierung gegenüber chemischem Angriff auf der Deponie und Auswaschung der Problemstoffe in den Deponieuntergrund dienen. Durch die Kristallisation von thermisch und chemisch sehr instabilen CASH (Calciumaluminatsilikathydrat) Phasen kann es bei thermischer und/oder nasschemisch-saurer Einwirkung während der weiteren Handhabung (Förderung, Lagerung, Transport, Deponierung) zu einer erneuten Instabilisierung der Zementsteinmatrix unter Freisetzung der genannten Schadstoffe in den Deponieuntergrund kommen. In den verwendeten Portlandzementen überwiegen die CS (Calciumsilikat) Anteile als hydraulisch wirkende Phasen. Die Schadstoffe werden im beschriebenen Prozess in einem vorgeschalteten Laugungsschritt ausgewaschen werden. Durch die hier eingestellten alkalischen Prozessbedingungen wird aber durch reagierendes metallisches Aluminium explosionsgefährlicher Wasserstoff freigesetzt, der den Prozess schwer beherrschbar macht und stark erhöhte Sicherheits- und Überwachungsmaßnahmen verlangt.

Im Verfahren gemäß der US 5416252 A1 wird ein Prozess für die Behandlung von festen Rückständen aus der Haus- und Industriemüllverbrennung, insbesondere von Schwermetallen und Sulfaten, beschrieben. Basierend auf einer anfänglichen Analyse hinsichtlich in diesen Rückstanden vorhandener Abbindebeschleuniger und -verzögerer werden hydraulische Bindemittel, z.B. Portlandzement, sowie Additive und Wasser zugesetzt, um in einer nachfolgenden Stückigmachung möglichst stabile Granulate, Pellets, etc. mit geringer Porosität und Permeabilität zu erhalten, damit Schadstoffe stabil eingeschlossen und nicht in den Deponieuntergrund ausgewaschen werden können. Gebildete CASH Phasen haben aber den Nachteil, dass es bei thermischer und/oder nass-saurer Einwirkung auf den gebildeten Zementstein zur Zerstörung der Bindemittelmatrix kommt und die eingeschlossenen Schadstoffe wieder freigesetzt werden. Dies tritt ein, wenn es zur Versauerung auf der Deponie, hervorgerufen durch Karbonatisierungsreaktionen und/oder Eintrag von Huminsäuren, kommt. Ebenso führt ein allfälliger Kalzinierungsschritt mit Temperaturen über 100°C nach der Stückigmachung zur Zerstörung dieser Phasen.

Die EP 1918031 A1 beschreibt ein thermisches Verfahren zur Entgiftung und Inertisierung von Aschen aus der Haus- und Industriemüll- oder Schlammverbrennung, wodurch insbesondere Schwermetalle unschädlich gemacht werden sollen. Zu diesem Zweck wird eine Mischung aus feinkörnigen Alumosilikate wie z.B. Tone, Kaolin, etc., exotherm reagierendem Material sowie einer Chlorquelle hergestellt. Nach Zusetzen von Wasser sowie einer Granulierung folgt der Kalzinierungsschritt mit ca. 700°C. Ziel dieses Verfahrens ist, Schwermetalle durch die Bildung von thermisch volatilen Chloriden während der Kalzinierung abzuscheiden. Die Zugabe von feinkörnigen Alumosilikaten zur Mischung bewirkt durch hohe spezifische Oberflächen und thermische Aktivierung in Form von Schmelzphasen eine Versinterung der alumosilikatischen Phasen zu einer festen Matrix der erzeugten Pellets. Nachteil bei diesem Verfahren sind einerseits die durch die hohen erforderlichen Temperaturen verursachten Energiekosten sowie andererseits die aufwändige, kostenintensive Abgasführung (hinsichtlich Korrosionsschutz und Materialwahl) und Abgasreinigung zum Auswaschen der gebildeten Schwermetallchloride und des Chlorwasserstoffs im Prozess.

Die DE 39 24 565 A1 zeigt ein Verfahren zur Herstellung von kristallinem Zeolith F aus Abfallstoffen von Verbrennungsanlagen. Hier eine Zerkleinerung in Feinstteilchen vor. Dadurch soll hier die Reaktivität verbessert werden. Dieses Verfahren würde Schwermetalle freisetzen. Im Übrigen sind in diesem Dokument weder Schwermetalle noch deren Inertisierung erwähnt. Die US 2012/0024235 A1 betrifft die Herstellung von Katzenstreu. Es sind hier keinerlei Schwermetalle oder andere Salzbildner vorhanden, somit besteht auch keine Notwendigkeit einer Inertisierung dieser Stoffe, gemäß dem Oberbegriff von Anspruch 1. DerAufsatz von Skavara et al. zu "Geopolymer materials based on fly ash" beschreibt die Herstellung von Baustoffen aus Geopolymeren. Es werden hier aber auch keinerlei Schwermetalle (und deren Inertisierung) beschrieben.

Bei dem Verfahren nach der EP 1 167 556 A2 wird bewusst Wasserstoff erzeugt. Die vorliegende Erfindung will die Bildung von gefährlichem Wasserstoff verhindern.

Die vorliegende Erfindung betrifft ein Verfahren zur Inertisierung von Schwermetallen, Chloriden und anderen Kontaminationen nach Patentanspruch 1.

Ziel der Erfindung ist daher ein Verwertungsverfahren zur Inertisierung von vorhandenen Schwermetallen, Chloriden und anderen Salzbildnern sowie metallischen Kontaminationen und löslichen Feststoffen in feuchten oder trockenen Verbrennungsaschen oder Abfällen von anderen thermischen, chemischen, mechanischen Prozessen mittels Fixierung und Stabilisierung in thermisch und chemisch stabile Phasen zu schaffen. Dieses Verfahren soll auch unter wirtschaftlichem Aspekt (Investitions-, Betriebs-, Entsorgungskosten hinsichtlich Transport und Deponierung) vorteilhaft einsetzbar sein.

Weiteres Ziel ist für die Entsorgung die weitere Handhabung hinsichtlich Förderung, Lagerung und Transport zu verbessern.

Die Erfindung ist daher dadurch gekennzeichnet, dass der Verbrennung oder dem thermischen, chemischen oder mechanischen Prozess eine Granulierung, nachgeschaltet ist. Unter entsprechenden Bedingungen kann hier eine chemische/mineralische Stabilisierung obengenannter Problemstoffe durch Einbindung und Fixierung sowie eine Formgebung und Formfestigkeit für eine gute Förderung, Lagerung und Transport erzielt werden. Eine günstige Weiterbildung der Erfindung ist dadurch gekennzeichnet, dass der Wassergehalt in der Asche-/Abfallmischung in Abhängigkeit der Asche-/Abfallbeschaffenheit sowie der für die Inertisierung/Stabilisierung erforderlichen Zugabemenge an Reaktionschemikalien eingestellt wird. Die Menge und Art der zugesetzten Reaktionschemikalien/Bindemittel ist von den chemischen und/oder alkalischen Eigenschaften des Abfalls/der Asche abhängig.

Hohe vorliegende Alkalität bei einem pH-Wert größer 11 und das Vorhandensein von alumosilikatischen Phasen bewirken deren Aktivierung unter Bildung von Hydratgelen, welche zur Vernetzung (Geopolymerisation/Kondensation) unter Einbindung/Fixierung obengenannter Problemstoffe führen.

Daneben führt das Vorhandensein hydraulisch wirkender Phasen bei Hydratation zu deren Aktivierung und Bildung von CASH (Calciumaluminatsilikathydrat) Phasen, welche ebenfalls zur Einbindung/Fixierung der obengenannten Problemstoffe dienen. Besonders vorteilhaft zur Bindung von chloridischen Salzen und Salzbildnern haben sich im Gegensatz zu CS (Calciumsilikat) und CAS (Calciumaluminatsilikat) Phasen hohe Anteile an CA (Calciumaluminat) Phasen erwiesen. In diesen können Chlor, chloridische Salze und Salzbildner chemisch/mineralisch während des Abbindevorganges vorteilhaft gebunden werden (z.B. als Friedelsches Salz, Hydrocalumit, Ettringit, etc.). Unter gleichbleibenden leicht sauren, neutralen und alkalischen Bedingungen verhalten sie sich hinsichtlich ihrer Löslichkeit und Reaktivität zu weiteren giftigen Schadstoffen inert. Im Unterschied zu Geopolymeren sind CASH Phasen aber nur bedingt wärme- und säurebeständig, sodass sie bei vorhersehbarer Versauerung der Deponie durch beispielsweise Karbonatisierungsreaktionen oder Eintrag von Huminsäuren durch Sickerwasser generell nicht eingesetzt werden sollten Sollte ein Kalzinierungsschritt mit einer Prozesstemperatur von über 100°C der Granulierung folgen, sollten hydraulische Bindemittel ebenso nicht eingesetzt werden, da sich bei diesen Temperaturen der Zementstein zu zersetzen beginnt.

Durch gezielte Erhöhung der als Hydratgele aktivierten alumosilikatischen und/oder hydraulischen Phasenanteile in Form von Bindemitteln kann der Einbindeeffekt hinsichtlich Inertisierung/Stabilisierung von kritischen Problemstoffen in die Abfall-/Aschematrix verstärkt und hinsichtlich der jeweiligen Kriterien für die Entsorgung optimiert werden.

Ist die Alkalität im feuchten Abfall/Asche für die Bildung der Hydratgele nicht ausreichend, müssen für den erwünschten Reaktionsmechanismus alkalisch wirkende Reaktionschemikalien z.B. Base, Wasserglas oder auch alkalische industrielle Abfallstoffe (z.B. Rotschlamm) zugesetzt werden.

Alternativ können bei unzureichender Alkalität silikatisch wirkende Bindemittel wie z.B. Wasserglas, Silanol, Kieselsäure zugegeben werden.

Hinsichtlich hydraulisch wirkender Bindemittel hat sich beispielsweise Tonerdezement mit hohen Anteilen an CA-Phasen bewährt.

Bei entsprechend hoher Alkalität/Basizität in der Asche/Abfall genügt der Zusatz von alumosilikatreichen Stoffen mit hoher spezifischer Oberfläche und in Folge hoher Reaktivität wie z.B. Bettasche, Kaolin, Metakaolin, Ziegelsplitt und anderen Abfällen aus der Bau- und Gesteinshüttenindustrie oder anderen Industriezweigen, da die Bildung der Hydratgele bereits während der Stückigmachung, beispielsweise Granulierung, erfolgt.

Ist keine hohe Alkalität vorhanden, müssen silikatisch wirkende und/oder hydraulisch wirkende Bindemittel, z.B. Wasserglas bzw. Tonerdezement, zugegeben werden.

Besonders vorteilhaft haben sich alumosilikatische Zusatzstoffe bzw. silikatisch wirkende Bindemittel mit einem Silikatanteil von größer 50 Masseprozent und/oder hydraulisch wirkende Bindemittel mit einem CA Anteil von größer 50 Masseprozent erwiesen.

Besonders günstig hat sich erwiesen, wenn der Granulierung, eine nasschemische, alkalische Behandlung zur gezielten Verringerung von reaktivem metallischem Aluminium sowie anderen unedlen metallischen Kontaminationen vorgeschaltet ist, damit während des im alkalischen Milieu stattfindenden Prozesses kein explosionsgefährlicher Wasserstoff freigesetzt werden kann.

Eine günstige Weiterbildung der Erfindung ist dadurch gekennzeichnet, dass der Granulierung eine Kalzinierung nachgeschaltet ist, welche das Ziel hat, das für den Reaktionsmechanismus zugefügte Wasser wieder abzuscheiden und schädliche nasschemisch bedingte Reaktionen für die weitere Handhabung zu unterbinden sowie die Entsorgungskosten zu senken.

Die Erfindung wird nun anhand der Zeichnungen beispielhaft beschrieben, wobei
Fig. 1 ein Fliessbild des erfindungsgemäßen Verfahrens,
Fig. 2 ein mögliches Anlagenschema des erfindungsgemäßen Verfahrens bei einer Verbrennungsanlage,
Fig. 3 eine Variante von Verfahrensschritten gemäß dem erfindungsgemäßen Verfahren darstellt.

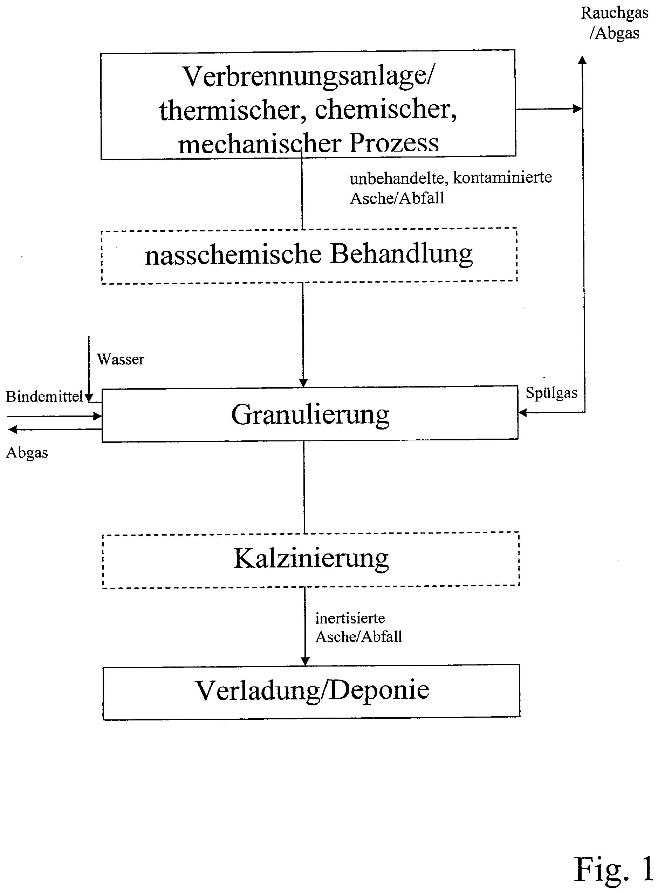

Fig. 1 zeigt schematisch das erfindungsgemäße Verfahren, wobei ausgehend von einer Verbrennungsanlage/thermischen, chemischen, mechanischen Prozess die dort anfallende Asche/Abfall, die mit Schwermetallen, Chloriden und anderen Salzbildnern sowie metallischen Kontaminationen und löslichen Feststoffen belastet ist, einem nachgeschalteten Aufbereitungsschritt zur Granulierung unterworfen wird. Es können natürlich auch andere Abfallstoffe aus thermischen, chemischen, mechanischen Prozessen wie z.B. Schlämme, Schlacken, Krätzen, Stäube, Filterkuchen aus der Metallindustrie sowie der Gesteinshüttenindustrie oder anderen Industriezweigen behandelt werden. Primäres Ziel der Granulierung ist die Stabilisierung von Schwermetallen, Chloriden und anderen Salzbildnern sowie anderen löslichen Feststoffen und die Fixierung von weiteren metallischen Kontaminationen durch Einschluss in der durch Kristallisation und Vernetzung sich ausgebildeten dichten und festen Bindemittelmatrix. Weiteres Ziel ist hinsichtlich der Entsorgung die weitere Handhabung in Bezug auf Förderung, Lagerung und Transport zu verbessern.

Bei Nichtvorhandensein von unedlen metallischen Phasen in der Asche aus einem Verbrennungsprozess bzw. im Abfall aus thermischen, chemischen, mechanischen Prozessen ist keine nasschemische Vorbehandlung erforderlich.

Die Granulierung, von Verbrennungsaschen bzw. Abfall aus thermischen, chemischen, mechanischen Prozessen führt durch Kristallisation und/oder Vernetzung von durch alkalisch aktivierten alumosilikatreichen Phasen in Form von Hydratgelen und hydraulischen Phasen zur chemischen/mineralischen Inertisierung/Stabilisierung von vorhandenen Schwermetallen, Chloriden und anderen Salzbildnern sowie metallischen Kontaminationen und löslichen Feststoffen. Bei Nichtvorhandensein dieser Phasen müssen Bindemittel zugesetzt werden.

Besonders vorteilhaft haben sich Zusatzstoffe bzw. silikatisch wirkende Bindemittel mit einem Silikatanteil von größer 50 Masseprozent und/oder hydraulisch wirkende Bindemittel mit einem CA Anteil von größer 50 Masseprozent erwiesen.

Der Wassergehalt ist hinsichtlich der Abfall-/Aschebeschaffenheit sowie Art und Menge des Bindemittels für eine vollständige Oberflächenbenetzung sowie die Bereitstellung von Wasser zur Hydratation dieser Bindemittelphasen zu optimieren.

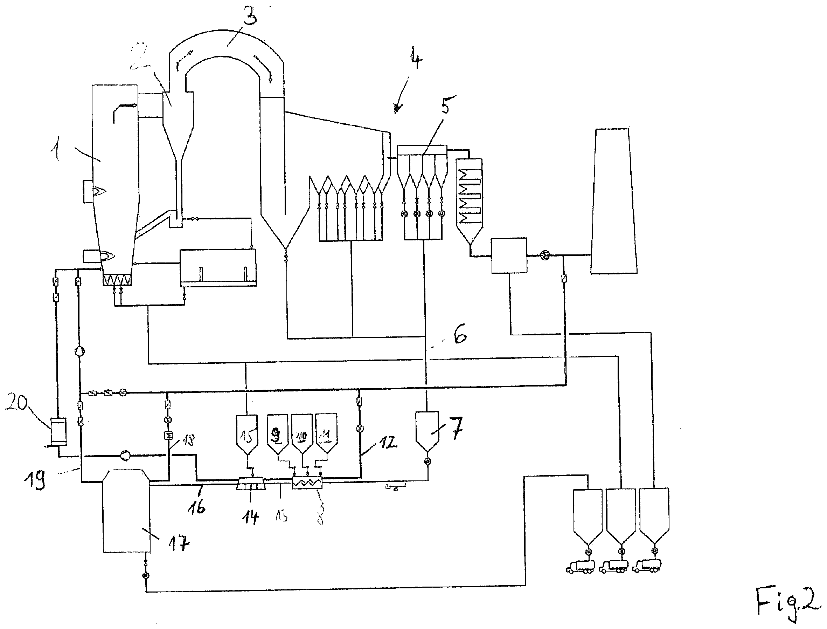

Fig. 2 zeigt ein vereinfachtes Anlagenschema zur Durchführung einer Variante des erfindungsgemäßen Verfahrens anhand einer Verbrennungsanlage.

Die Verbrennungsanlage ist hier als zirkulierender Wirbelschichtkessel 1 mit Zyklon 2, Nachbrennkammer 3 sowie Staubabscheidern 4 inklusive Multizyklon 5 dargestellt. Die kontaminierte, unbehandelte Flugasche 6 wird über einen Pufferbehälter 7 in einen Mischer/Kneter 8 zur nasschemischen Behandlung geführt. Unter Zugabe von Wasser 9 und anderen alkalisch wirkenden Reaktionsmitteln wie hier z.B. dargestellt Base 10 und/oder Nitrat 11 erfolgt hier die nasschemische Behandlung. Durch die Hydratation/Oxidation von unedlen metallischen Phasen werden abhängig von deren Gehalt in der Flugasche Wasserstoff/Ammoniak freigesetzt. Entsprechend muss die Bildung einer explosionsgefährlichen Atmosphäre im Mischer/Kneter 8 und in seiner unmittelbaren Umgebung durch Gasspülung verhindert werden. Aus dem Verbrennungsprozess abgezweigtes Rauchgas 12 kann als Spülgas in Betracht gezogen werden. Das im Abgas enthaltene Brenngas wird zur energetischen Nutzung in die Brennkammer 1 rückgeführt. Ein vorgeschalteter Wäscher 20 dient der Abscheidung von Ammoniak.

Nach Beendigung der mechanischen Beanspruchung im Mischer/Kneter 8 und Austrag besteht die Gefahr, dass bei weiterer Handhabung die feuchte thixotrope Mischung durch Kristallisation und/oder Polymerisation/Kondensation von vorhandenen Bindemittelphasen innerhalb kurzer Zeit unkontrolliert abbindet und eine feste Masse bildet. Ziel der nachfolgenden Stückigmachung/Granulierung ist daher eine in förder-, lager- und transporttechnischer Hinsicht optimale Formgebung und Formfestigkeit sowie die Erzielung einer optimalen Granulatform und Festigkeit für den nachgeschalteten Kalzinierschritt. Nach dem Mischer/Kneter 8 wird das Produkt 13 aus der nasschemischen Behandlung einem Granulator 14 zur Mischung und Formgebung zugeführt. Der Granulator arbeitet vorzugsweise nach dem kontinuierlichen oder quasi-kontinuierlichen Prinzip.

In diesen Granulator 14 werden zusätzlich Bindemittel 15 eingebracht. Bei entsprechend hoher Alkalität z.B. nach der allfälligen nasschemischen Behandlung genügt der Zusatz von feiner Bettasche mit einem hohen alumosilikatischen Anteil und hoher spezifischer Oberfläche, zur Bildung von den zum Abbinden erforderlichen Hydratgelen, welche während der Stückigmachung, beispielsweise Granulierung, bereits erfolgt. Daneben besitzt feine Bettasche hohe Anteile hydraulisch wirkender Phasen. Jedenfalls sind bei nachgeschalteter Kalzinierung Zusatzstoffe, welche zur Bildung von Geopolymeren führen, aufgrund deren guten thermischen Stabilität im Gegensatz zu hydraulisch wirkenden Zusatzstoffen einzusetzen.

Feine Bettasche hat daneben den Vorteil, dass ihre Problemstoffgehalte z.B. Chloride und andere Salzbildner, Schwermetalle und lösliche Feststoffe sowie metallische Kontaminationen meist vernachlässigbar gering sind.

Durch eine in förder-, lager- und transporttechnischer Hinsicht optimale Formgebung/Formfestigkeit kann erreicht werden, dass das Produkt nach der nasschemischen Behandlung mit thixotropen Eigenschaften und Vorhandensein von hydratisierten Bindemittelphasen nicht unkontrolliert abbindet und eine feste Masse bildet, sondern weiterhin förderbar, lagerbar und transportierbar ist.

Die Sicherheits- und Überwachungsmaßnamen sind aufgrund von möglicherweise durch die nasschemische Mischung nicht abgeschiedenem metallischen Aluminium oder anderen unedlen metallischen Phasen mit vorhandenem Reaktionspotenzial zur Bildung von explosionsgefährlichem, gasförmigen Wasserstoff entsprechend der nasschemischen Behandlung ausgeführt.

Das Produkt 16 aus dem Granulationsschritt wird beispielhaft zusätzlich einem Kalzinierofen 17 zugeführt. Dies kann beispielsweise ein Etagenofen sein, wobei je Herd (Etage) die Prozessparameter Temperatur und Verweilzeit variiert werden können.

Die Beheizung des Kalzinierofens 17 erfolgt hier konvektiv mit Rauchgas 18 im Gegenstrom. Sie kann aber auch in Kombination mit anderen Trocknungsverfahren z.B. Strahlungstrocknung und Kontakttrocknung geschehen. Die Erfindung ist nicht auf den Einsatz eines Etagenofens beschränkt, vielmehr können auch äquivalente Thermoreaktoren mit entsprechenden Eigenschaften eingesetzt werden, wie z.B. Trommeltrockner, Bandtrockner o.ä.. Das Abgas 19 wird dann zur Wärmerückgewinnung in die Brennkammer 1 zurückgeführt, was zu Energieeinsparungen führt.

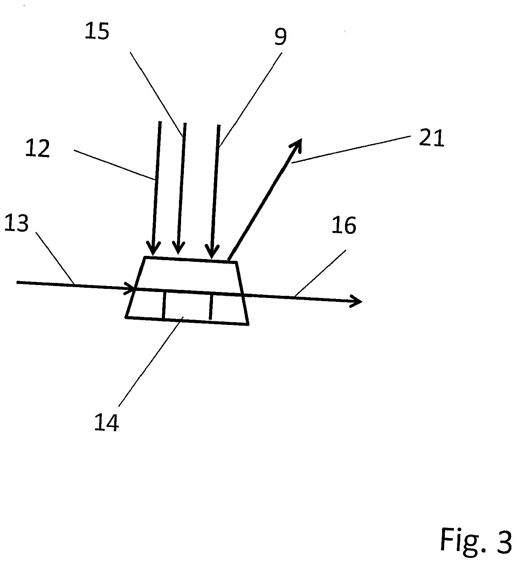

Fig. 3 zeigt die Verfahrensstufe Stückigmachung/Granulierung separat. Diese kann der Verbrennung bzw. dem thermischen, chemischen, mechanischen Prozess ohne Zwischenschritt nachgeschaltet werden, falls die Asche keine unedlen metallischen Phasen aufweist, welche bei Befeuchtung durch Hydratation/Oxidation explosionsgefährlichem Wasserstoff freisetzen. Ansonsten sollte eine nasschemische Behandlung vorgeschaltet werden.

Ausgehend von einer Verbrennungsanlage/thermischen, chemischen, mechanischen Prozess wird die dort anfallende Asche/Abfall, die mit Schwermetallen, Chloriden und anderen Salzbildnern sowie metallischen Kontaminationen und löslichen Feststoffen belastet ist, einem nachgeschalteten Aufbereitungsschritt zur Granulierung unterworfen. Primäres Ziel der Granulierung ist die chemische Stabilisierung von Schwermetallen, Chloriden und anderen Salzbildnern sowie anderen löslichen Feststoffen und die Fixierung von weiteren metallischen Kontaminationen durch Einschluss in der durch Kristallisation und Vernetzung sich ausgebildeten festen Bindemittelmatrix. Weiteres Ziel ist für die Entsorgung die weitere Handhabung hinsichtlich Förderung, Lagerung und Transport zu verbessern sowie die Erzielung einer optimalen Granulatform und Festigkeit für einen wahlweise nachgeschalteten Kalzinierschritt. Die Granulierung (Stückigmachung) wird vorzugsweise unter alkalischen Bedingungen bei einem pH-Wert von größer 11 durchgeführt.

Die Asche/Abfall 13 wird beispielsweise einem Granulator 14 zugeführt. Hier wird gegebenenfalls Wasser 9 sowie geeignetes Bindemittel 15 zugegeben. Weiters wird Spülgas 12 zugeführt, das als Abgas 21 gegebenenfalls einem Wäscher zugeleitet werden kann.

Die Granulierung von Verbrennungsaschen bzw. Abfall aus thermischen, chemischen, mechanischen Prozessen führt durch Kristallisation und/oder Vernetzung von durch alkalisch aktivierten alumosilikatreichen Phasen und hydraulischen Phasen zur chemischen/mineralischen Inertisierung/Stabilisierung von vorhandenen Schwermetallen, Chloriden und anderen Salzbildnern sowie metallischen Kontaminationen und löslichen Feststoffen. Bei Nichtvorhandensein dieser Phasen müssen geeignete Bindemittel 15 zugesetzt werden.

Das erfindungsgemäße Verwertungsverfahren ist beispielsweise einem Verbrennungsprozess oder anderem thermischen, chemischen, mechanischen Prozess nachgeschaltet und kann als verbundene oder unabhängige Anlage betrieben werden, wobei die technische Notwendigkeit eines vorgeschalteten nasschemischen Behandlungs- und/oder nachfolgenden Kalzinierschritts von der Asche-/Abfallbeschaffenheit des Ausgangsstoffes hinsichtlich der weiteren Handhabung (Förderung, Lagerung, Entsorgung) abhängig ist.

Die Granulierung kann separat oder folgend auf eine nasschemische Behandlung und/oder gefolgt von einer Kalzinierung eingesetzt werden.

## Patentansprüche

1. Verfahren zur Inertisierung von Schwermetallen, Chloriden und anderen Salzbildnern sowie löslichen Feststoffen und metallischen Kontaminationen in Aschen und/oder Abfällen aus Verbrennungsprozessen oder anderen thermischen, chemischen, mechanischen Prozessen, durch alumosilikatische Fixierung oder Stabilisierung in mineralischen Polymeren mit einer sich ausgebildeten dichten und festen Bindemittelmatrix, **dadurch gekennzeichnet, dass** der Verbrennung oder dem thermischen, chemischen, mechanischen Prozess eine Granulierung, vorzugsweise mit kontinuierlicher oder quasi-kontinuierlicher Arbeitsweise, nachgeschaltet ist.

2. Verfahren nach Anspruch 1, **dadurch gekennzeichnet, dass** der erforderliche Wassergehalt in der Mischung aus der Asche/Abfall und Reaktionschemikalien/Bindemittel in Abhängigkeit der Asche-/Abfallbeschaffenheit sowie der für die Inertisierung erforderlichen Zugabemenge an Reaktionschemikalien/Bindemittel hinsichtlich der Bildung von Geopolymeren in der Aschemischung eingestellt wird.

3. Verfahren nach Anspruch 2, **dadurch gekennzeichnet, dass** bei der Granulierung die Zugabe von alkalisch aktivierbaren alumosilikatischen Zusatzstoffen mit hoher spezifischer Oberfläche erfolgt.

4. Verfahren nach Anspruch 3, **dadurch gekennzeichnet, dass** als alkalisch aktivierbare alumosilikatische Zusatzstoffe mit hoher spezifischer Oberfläche Bettasche, Metakaolin, Kaolin, Ziegelsplitt zugegeben werden.

5. Verfahren nach Anspruch 3 oder 4, **dadurch gekennzeichnet, dass** als alkalisch aktivierbare alumosilikatische Zusatzstoffe mit hoher spezifischer Oberfläche Bindemittel in Form von silikatisch wirkendem Bindemittel mit einem Silikatanteil von größer 50 Masseprozent zugegeben werden.

6. Verfahren nach Anspruch 5, **dadurch gekennzeichnet, dass** Wasserglas, Silanol, Kieselsäure zugegeben werden.

7. Verfahren nach Anspruch 3, **dadurch gekennzeichnet, dass** im Falle von leicht sauren, neutralen bzw. alkalischen Deponierungsbedingungen Zusatzstoffe in Form von hydraulisch wirkenden Bindemitteln mit einem Calciumaluminatanteil von größer 50 Masseprozent zugegeben werden.

8. Verfahren nach Anspruch 7, **dadurch gekennzeichnet, dass** als hydraulisches Bindemittel Tonerdezement zugegeben wird.

9. Verfahren nach Anspruch 3, **dadurch gekennzeichnet, dass** bei Zugabe von alumosilikatischen Zusatzstoffen der pH-Wert in der feuchten Asche-/Abfallmischung größer 11 ist.

10. Verfahren nach Anspruch 9, **dadurch gekennzeichnet, dass** zur Erhöhung des pH-Wertes bei einer Alkalität von pH-Wert kleiner 11 alkalisch wirkende Reaktionschemikalien wie z.B. Base, Lauge oder auch industrielle Abfallstoffe wie z.B. Rotschlamm, zugegeben werden.

11. Verfahren nach einem der Ansprüche 1 bis 10, **dadurch gekennzeichnet, dass** der Granulierung eine nasschemische Behandlung zur Verringerung/Inertisierung von metallischem Aluminium sowie anderen unedlen metallischen Kontaminationen vorgeschaltet ist.

12. Verfahren nach einem der Ansprüche 1 bis 11, **dadurch gekennzeichnet, dass** der Granulierung eine Kalzinierung zur Abscheidung des reaktionserforderlichen Wassers nachgeschaltet ist.

13. Verfahren nach Anspruch 12, **dadurch gekennzeichnet, dass** bei Zugabe von hydraulischem Bindemittel die Kalzinierungstemperatur 100°C nicht überschritten wird.

## Claims

1. Method for inerting of heavy metals, chlorides and other halogens as well as soluble solids and metallic contaminations in ash and/or waste from combustion processes or other thermal, chemical, mechanical processes by means of aluminosilicate fixation or stabilizing in mineral polymers with a tight and stable binder matrix forming, **characterised in that** combustion or the thermal, chemical, mechanical process is followed by granulation, preferably in a continuous or virtually continuous operating mode.

2. Method according to claim 1, **characterised in that** the necessary water content in the mixture of ash/waste and reactive chemicals/binders is set according to the composition of the ash/waste and the amount of reactive chemicals/binders that must be added for inerting with regard to the formation of geopolymers in the ash mixture.

3. Method according to claim 2, **characterized in that** alkali-activated, aluminosilicate additives with a large specific surface area are added during granulation.

4. Method according to claim 3, **characterised in that** combustion bed ash, metakaolin, kaolin, and slate chippings are added as alkali-activated, aluminosilicate additives with a large specific surface area.

5. Method according to claim 3 or 4, **characterised in that** binders in the form of silicate-activated binders with a silicate content of more than 50 per cent by weight are added as alkali-activated, aluminosilicate additives with a large specific surface area.

6. Method according to claim 5, **characterised in that** water glass, silanol or silica are added.

7. Method according to claim 3, **characterised in that** additives in the form of hydraulically activated binders with a calcium aluminate content of more than 50 per cent by weight are added if landfill conditions are slightly acid, neutral or alkaline.

8. Method according to claim 7, **characterised in that** alumina cement is added as hydraulic binder.

9. Method according to claim 3, **characterised in that** the wet ash and waste mix has a pH-value of more than 11 when aluminosilicate additives are added.

10. Method according to claim 9, **characterised in that** alkali-activated reactive chemicals, such as alkali, lye or also industrial waste substances such as red mud, are added to increase the pH-value if alkalinity is less than a pH-value of 11.

11. Method according to one of claims 1 to 10, **characterised in that** granulation is preceded by wet-chemical treatment to reduce/inertise metallic aluminium and other non-precious metallic contaminations.

12. Method according to one of claims 1 to 11, **characterised in that** granulation is followed by calcination in order to remove the water required for the reaction.

13. Method according to claim 12, **characterised in that** the calcination temperature does not exceed 100°C when hydraulic binders are added.

## Revendications

1. Procédé d'inertage de métaux lourds, de chlorures et autres halogènes ainsi que des solides solubles et des contaminations métalliques dans les cendres et/ou déchets provenant des processus de combustion ou d'autres processus thermiques, chimiques, mécaniques par fixation ou stabilisation de type aluminosilicate dans des polymères minéraux avec une matrice de liant formée dense et stable, **caractérisé en ce que** la combustion ou le processus thermique, chimique, mécanique est suivie par la granulation, de préférence dans un mode opératoire continu ou quasi-continu.

2. Procédé selon la revendication 1, **caractérisé en ce que** la teneur en eau nécessaire dans le mélange de cendres/déchets et des produits chimiques de réaction/liants est déterminée en fonction de la composition des cendres/déchets et de la quantité de produits chimiques de réaction/liants qui doivent être ajoutés pour l'inertage, compte tenu de la formation de géopolymères dans le mélange de cendres.

3. Procédé selon la revendication 2, **caractérisé en ce que** des additifs de type aluminosilicate alcali-activés ayant une surface spécifique élevée sont ajoutés pendant la granulation.

4. Procédé selon la revendication 3, **caractérisé en ce que** la cendre du lit de combustion, le métakaolin, le kaolin et des débris d'ardoise sont ajoutés en tant qu'additifs de type aluminosilicate alcali-activés ayant une surface spécifique élevée.

5. Procédé selon la revendication 3 ou 4, **caractérisé en ce que** les liants sous forme de liants silicate-activés dont la teneur en silicate est supérieure à 50 pourcent en poids sont ajoutés en tant qu'additifs de type aluminosilicate alcali-activés ayant une surface spécifique élevée.

6. Procédé selon la revendication 5, **caractérisé en ce que** du verre soluble, du silanol ou de la silice sont ajoutés.

7. Procédé selon la revendication 3, **caractérisé en ce que** des additifs sous la forme de liants activés hydrauliquement dont la teneur en aluminate de calcium est supérieure à 50 pourcent en poids sont ajoutés si les conditions de mise en décharge sont légèrement acides, neutres ou alcalines.

8. Procédé selon la revendication 7, **caractérisé en ce que** le ciment alumineux est utilisé en tant que liant hydraulique.

9. Procédé selon la revendication 3, **caractérisé en ce que** le mélange de cendre mouillée/déchets présente une valeur de pH supérieure à 11 lorsque des additifs de type aluminosilicate sont ajoutés.

10. Procédé selon la revendication 9, **caractérisé en ce que** les produits chimiques de réaction alcali-activés, tels que les solutions alcalines ou les déchets industriels tels que la boue rouge, sont ajoutés afin d'augmenter la valeur de pH si l'alcalinité est inférieure à une valeur de pH à 11.

11. Procédé selon l'une quelconque des revendications 1 à 10, **caractérisé en ce que** la granulation est précédée par un traitement chimique par voie aqueuse pour réduire/inerter l'aluminium métallique ou d'autres contaminations de métaux communs.

12. Procédé selon l'une quelconque des revendications 1 à 11, **caractérisé en ce que** la granulation est suivie par la calcination afin de séparer l'eau nécessaire à la réaction.

13. Procédé selon la revendication 12, **caractérisé en ce que** la température de calcination ne doit pas dépasser 100°C lorsque des liants hydrauliques sont ajoutés.
